# EUROPEAN PATENT APPLICATION

(11) **EP 4 462 499 A1**
(43) Date of publication of application: **13.11.2024**
(21) Application number: 23737457.4
(22) Date of filing: 06.01.2023
(51) Int. Cl.: H01M 4/131, H01M 4/36, H01M 4/525, H01M 4/505, H01M 4/62, H01M 4/1391, H01M 4/04, H01M 10/052, H01M 4/02

(54) **SOLID-STATE SECONDARY BATTERY CATHODE AND SOLID-STATE SECONDARY BATTERY COMPRISING SAME**

(30) Priority: 06.01.2022 JP 2022000836
(71) Applicant: SAMSUNG SDI CO., LTD., Giheung-gu Yongin-si, Gyeonggi-do 17084 (KR)
(72) Inventor: KIMURA, Hiroshi, Yokohama-shi, Kanagawa 230--0027 (JP); FUJIKI, Satoshi, Yokohama-shi, Kanagawa 230--0027 (JP)
(74) Representative: Gulde & Partner
(86) International application number: PCT/KR2023/000340
(87) International publication number: WO 2023/132709

(57) **Abstract**

Provided is a positive electrode for a solid-state secondary battery, which suppresses the internal resistance of a battery while causing a solid-state secondary battery to have a sufficiently high energy density, and thus satisfies high levels with respect to both capacity and output.

The positive electrode for a solid-state secondary battery includes a positive electrode current collector and a positive electrode active material layer, wherein the positive electrode active material layer includes a positive electrode active material, a solid electrolyte, a binder, and a conductive auxiliary agent, an amount of the positive electrode active material based on 100 wt% of the positive electrode active material layer is greater than or equal to 85 wt% and less than or equal to 92 wt%, an amount of the solid electrolyte based on 100 wt% of the positive electrode active material layer is greater than or equal to 7 wt% and less than or equal to 15 wt%, when the amount of the positive electrode active material in the positive electrode active material layer is 100 wt%, an amount of the binder in the positive electrode active material layer is greater than or equal to 0.1 wt% and less than or equal to 1.0 wt%, when the amount of the solid electrolyte in the positive electrode active material layer is 100 wt%, an amount of the conductive auxiliary agent in the positive electrode active material layer is greater than or equal to 0.1 wt% and less than or equal to 10 wt%.

## Description

### [Technical Field]

This disclosure relates to a positive electrode for a solid-state secondary battery and a solid-state secondary battery including the same.

### [Background Art]

In order to further popularize and expand electric vehicles, it is essential to extend the range, and further higher energy density (e.g., 800 Wh/L or more) is required for all-solid-state secondary batteries used in electric vehicles.

As a method of increasing the energy density of an all-solid-state secondary battery to a higher energy density than before, an amount of the positive electrode active material in the positive electrode of the all-solid-state secondary battery is increased or a particle size of the positive electrode active material is increased, and thus the density and charge rate of the positive electrode active material in the positive electrode may be improved.

Additionally, it is conceivable to increase the thickness of the positive electrode to obtain a higher capacity positive electrode.

### [Prior Art]

### [Patent reference]

(Patent Document 1) Japanese Patent Laid-Open Publication No. 2003-036848

### [Non-patent Document]

(Non-patent Document 1) Naoki Suzuki et al., "Synthesis and Electrochemical Properties of I4--type Li1+2xZn1-xPS4 Solid Electrolyte", Chemistry of Materials, published March 9, 2018, No. 30, 2236-2244(2018)

### [DETAILED DESCRIPTION OF THE INVENTION]

### [Technical Problem]

However, when the amount of the positive electrode active material in the positive electrode is increased or the particle size of the positive electrode active material is increased, the density and charge rate of the positive electrode active material in the positive electrode increase, but a contact area between the positive electrode active material and the solid electrolyte or conductive material is small. If so, there is a problem that the lithium ion conductivity and electronic conductivity in the positive electrode decrease, and the internal resistance of the positive electrode increases.

Also, if the thickness of the anode is increased, the internal resistance of the positive electrode also increases. The present invention has been made in consideration of these problems, and provides a positive electrode for an all-solid-state secondary battery that satisfies high levels in both capacity and output by suppressing the internal resistance of the battery while increasing the energy density of the all-solid-state secondary battery sufficiently.

### [Technical Solution]

That is, the positive electrode for a solid-state secondary battery according to an embodiment includes a positive electrode current collector and a positive electrode active material layer,
the positive electrode active material layer includes a positive electrode active material, a solid electrolyte, a binder, and a conductive auxiliary agent,
an amount of the positive electrode active material based on 100 wt% of the positive electrode active material layer is greater than or equal to 85 wt% and less than or equal to 92 wt%,
an amount of the solid electrolyte based on 100 wt% of the positive electrode active material layer is greater than or equal to 7 wt% and less than or equal to 15 wt%,
when the amount of the positive electrode active material in the positive electrode active material layer is 100 wt%, an amount of the binder in the positive electrode active material layer is greater than or equal to 0.1 wt% and less than or equal to 1.0 wt%, and
when the amount of the solid electrolyte in the positive electrode active material layer is 100 wt%, an amount of the conductive auxiliary agent in the positive electrode active material layer is greater than or equal to 0.1 wt% and less than or equal to 10 wt%.

According to the positive electrode for a solid-state secondary battery constructed in this way, the amount of the positive electrode active material in the positive electrode can be increased as much as possible, and a balance of the positive electrode active material, solid electrolyte, binder, and conductive auxiliary agent can be optimally achieved. As a result, by increasing the amount of positive electrode active material, lithium ionic conductivity and electronic conductivity can be optimized, thereby realizing high energy density and suppressing the increase in internal resistance in the positive electrode.

It is desirable that the D50 of the secondary particles of the positive electrode active material based on the volume-based particle size distribution obtained by laser diffraction/scattering particle size distribution measurement method is greater than or equal to 1 µm and less than or equal to 20 µm.

Meanwhile, the D50 of the positive electrode active material based on the volume-based particle size distribution obtained by laser diffraction/scattering particle size distribution measurement method is measured using water as a dispersion medium and a particle size distribution measuring device (MT3000) from Microtrack System Inc.

The positive electrode active material may include two types of positive electrode active materials with different D50, and one of the two types of positive electrode active materials, a small particle size positive electrode active material has a D50 of greater than or equal to 1 µm and less than 10 µm and the other large particle size positive electrode active material has a D50 of greater than or equal to 10 µm and less than or equal to 20 µm.

The small particle size positive electrode active material may have the D50 of greater than or equal to 2 µm and less than 8 µm and the large particle size positive electrode active material may have the D50 of greater than or equal to 8 µm and less than or equal to 20 µm. The small particle size positive electrode active material may have the D50 of greater than or equal to 2 µm and less than 8 µm and the large particle size positive electrode active material may have the D50 of greater than or equal to 10 µm and less than or equal to 20 µm.

The positive electrode active material may satisfy any one of Chemical Formula 1 or Chemical Formula 2.

[Chemical Formula 1] LiₐNiₓCo_{y}M_{1-x-y}O₂

[Chemical Formula 2] LiaNixCoyO2

Meanwhile, M in Chemical Formula 1 is one or more metal elements selected from aluminum and manganese. In addition, a, x, y, and 1-x-y in Chemical Formula 1 and Chemical Formula 2 are numbers satisfying 0.20 ≤ a ≤ 1.20, 0.80 ≤ x<1.00, 0<y ≤ 0.20, 0<1-x-y ≤ 0.10, respectively.

The solid electrolyte may be a sulfide-based solid electrolyte including lithium, phosphorus, and sulfur, and
a D50 of primary particles and/or secondary particles of the solid electrolyte based on a volume-based particle size distribution obtained by a laser diffraction/scattering particle size distribution measurement method may be greater than or equal to 0.1 µm and less than or equal to 3 µm.

In order to further suppress the internal resistance of the positive electrode, it is desirable that the volume density of the positive electrode active material layer after compressing greater than or equal to 3.2 g/cm³.

In the case of a solid-state secondary battery equipped with a positive electrode for a solid-state secondary battery according to the present embodiment, a discharge energy density ratio which is obtained by dividing the discharge energy density when a discharge current is 1 C by the discharge energy density when a discharge current is 0.1 C may be set to greater than or equal to 0.70 and less than 1.00. The discharge energy density ratio is an indicator that the larger the value, the smaller the internal resistance of the battery. This value is greater than or equal to 0.70, indicating that a solid-state secondary battery has sufficiently small internal resistance, that is, high output.

### [Effect of the Invention]

As described above, according to an embodiment, it is possible to provide a positive electrode for a solid-state secondary battery that satisfies high levels in both capacity and output by suppressing the internal resistance of the battery while increasing the energy density of the solid-state secondary battery sufficiently.

### [Description of the Drawings]

FIG. 1 is a cross-sectional view showing a schematic configuration of an all-solid-state secondary battery according to an embodiment.
FIG. 2 is a diagram showing the relationship between the particle size distribution of the positive electrode active material and the density of the positive electrode active material.

### [Best mode for carrying out the invention]

An embodiment will be described in detail below.

### <1. Basic configuration of solid-state secondary battery according to the present embodiment >

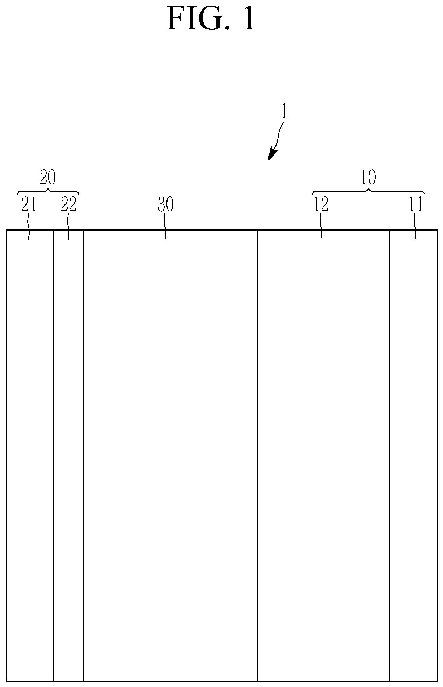

Hereinafter, the solid-state secondary battery will be described with reference to FIG. 1. FIG. 1 is a cross-sectional view showing a schematic configuration of an all-solid-state secondary battery according to an embodiment.

Referring to FIG. 1, the all-solid-state secondary battery 1 according to the present embodiment is an all-solid-state lithium ion battery including a positive electrode 10, a negative electrode 20, and a solid electrolyte layer 30 between the positive electrode and the negative electrode.

### (1-1. Positive Electrode)

The positive electrode 10 includes a positive electrode current collector 11 and a positive electrode active material layer 12.

The positive electrode current collector 11 may be, for example, a plate-shaped body or a thin body made of one or more materials selected from indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The positive electrode active material layer 12 is a layer including a positive electrode active material that reversibly intercalates and deintercalates lithium ions. Because the positive electrode active material layer is a feature of the above embodiment, it will be described in detail later.

### (1-2. Negative Electrode)

The negative electrode 20 includes a negative electrode current collector 21 and a negative electrode active material layer 22.

The negative electrode current collector 21 is desirably made of a material that does not react with lithium, that is, does not form any alloy or compound. A material constituting the negative electrode current collector, may have, for example, a plate or thin shape made of one or more metals selected from copper (Cu), stainless steel, titanium (Ti), iron (Fe), cobalt (Co), and nickel (Ni), an alloy, or a clad material.

The negative electrode active material layer 22 includes a negative electrode active material.

The negative electrode active material may include, for example, amorphous carbon and an alloy forming element that forms an alloy with lithium. Examples of the alloy forming element include one or more selected from gold, platinum, palladium, silicon, silver, aluminum, bismuth, tin, and zinc. Herein, examples of the amorphous carbon may include carbon black, graphene, and graphite. Examples of carbon black may include acetylene black, furnace black, and ketjen black. Additionally, in order to improve electronic conductivity, the surface of silicon may be covered with a carbon layer with a thickness of 1 to 10 nm.

Herein, when any one or more of gold, platinum, palladium, silicon, silver, aluminum, bismuth, tin, and zinc is used as the alloy forming element, these negative electrode active materials are, for example, in the form of particles, and the particle size is desirably 4 µm or less, more desirably 300 nm or less. In this case, the characteristics of the all-solid-state secondary battery are further improved. Herein, the particle size of the secondary particles of the negative electrode active material may be, for example, a median diameter (so-called D₅₀) measured using a laser particle size distribution meter. On the other hand, D50 of the negative electrode active material based on the volume-based particle size distribution obtained by laser diffraction/scattering particle size distribution measurement method may be calculated using N-methylpyrrolidone (NMP) as a dispersion medium, using a particle size distribution measuring device (MT3000) manufactured by Microtrack System Inc.

In addition to the negative electrode active material described above, the negative electrode active material layer may be appropriately blended with additives used in conventional all-solid-state lithium ion secondary batteries, such as binders, fillers, dispersants, and ion conductive auxiliary agents.

### (1-3. Solid Electrolyte Layer)

The solid electrolyte layer includes a solid electrolyte.

The solid electrolyte is composed of, for example, a sulfide-based solid electrolyte material. The sulfide-based solid electrolyte material may include, for example, Li₂S-P₂S₅, Li₂S-P₂S₅-LiX (wherein X is a halogen element, for example, I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are a positive number, and Z is either Ge, Zn or Ga), Li₂S-GeS₂, Li₂S-SiS₂-Li₃PO₄, Li₂S-SiS₂-LiₚMO_{q} (wherein p and q are positive numbers, and M is any one of P, Si, Ge, B, Al, Ga or In), Li₆PS₅Cl having an argyrodite type crystal structure, and the like. The sulfide-based solid electrolyte material is produced by treating starting materials (e.g., Li₂S, P₂S₅, etc.) by melting quenching or mechanical milling. Additionally, heat treatment may be further performed after these treatments. The solid electrolyte may be amorphous, crystalline, or a mixture of both.

Also, as the solid electrolyte, among the above-mentioned sulfide-based solid electrolyte materials, it is desirable to use one including at least sulfur (S), phosphorus (P), and lithium (Li) as constituent elements, and especially one including Li₂S-P₂S₅.

When using a material including Li₂S-P₂S₅ as the sulfide-based solid electrolyte material forming the solid electrolyte, the mixing molar ratio of Li₂S and P₂S₅ may be selected from the range of, for example, Li₂S : P₂S₅=50 : 50 to 90 : 10. Additionally, the solid electrolyte layer may further include a binder. The binder included in the solid electrolyte layer may include, for example, styrenebutadiene rubber (SBR), polytetrafluoroethylene, polyvinylidene fluoride, and polyethylene.

### <2. Configuration of Solid-state Secondary Battery According to the Present Embodiment>

The positive electrode active material layer constituting the positive electrode of the all-solid-state lithium ion secondary battery according to the present embodiment includes a positive electrode active material, a solid electrolyte, a conductive auxiliary agent, and a binder.

Examples of the positive electrode active material may include lithium salts such as lithium cobalt oxide (hereinafter referred to as LCO), lithium nickel oxide, lithium nickel cobalt oxide, lithium nickel cobalt aluminum oxide (hereinafter referred to as NCA), lithium nickel cobalt manganate (hereinafter also referred to as NCM), lithium manganate, or lithium iron phosphate, nickel sulfide, copper sulfide, lithium sulfide, sulfur, iron oxide, vanadium oxide, etc. These positive electrode active materials may be used individually, or may be used in combination of two or more types.

Among these, it is desirable to use a compound represented by Chemical Formula 1 or Chemical Formula 2 as the positive electrode active material. These are called high-Ni positive electrode active materials, and by employing such a positive electrode active material, cycle stability and energy density can be further improved.

[Chemical Formula 1] LiₐNiₓCO_{y}M_{1-x-y}O₂

[Chemical Formula 2] LiaNixCoyO2

Meanwhile, M in Chemical Formula 1 is one or more metal elements selected from aluminum and manganese. In addition, a, x, y, and 1-x-y in Chemical Formula 1 and Chemical Formula 2 are numbers satisfying 0.20 ≤ a ≤ 1.20, 0.80 ≤ x<1.00, 0<y ≤ 0.20, 0<1-x-y ≤ 0.10, respectively.

The positive electrode active material may be covered with a coating layer. As the coating layer, a known coating layer for a positive electrode active material of an all-solid-state secondary battery can be used, and for example, Li₂O-ZrO₂ may be used.

In addition, when the positive electrode active material is formed of a lithium salt of a ternary transition metal oxide such as NCA or NCM and includes nickel (Ni) as the positive electrode active material, the capacity density of the all-solid-state lithium ion secondary battery is increased, and metal elution from the positive electrode active material in a charged state can be reduced. Accordingly, the all-solid-state secondary battery according to the present embodiment can improve long-term reliability and cycle characteristics in a charged state. In order to further exhibit these characteristics, it is more desirable that the nickel (Ni) content in the positive electrode active material is high. A nickel content in the positive electrode active material is desirably greater than or equal to 60 mol%, and more desirably greater than or equal to 80 mol%. On the other hand, if it is less than or equal to 95 mol%, it is desirable because it can suppress a decrease in battery capacity in charge and discharge evaluation.

The shape of the positive electrode active material is desirably, for example, a particle shape such as a true sphere or an elliptical sphere.

The particle size of the secondary particles of the positive electrode active material may have a D50 based on a volume-based particle size distribution obtained by a laser diffraction/scattering particle size distribution measurement method of greater than or equal to 1 µm and less than or equal to 20 µm, greater than or equal to 2 µm and less than or equal to 19 µm, greater than or equal to 3 µm and less than or equal to 18 µm.

To be more specific, it is desirable to use a mixture of two types of positive electrode active materials with different D50 as the positive electrode active material. Among these two types of positive electrode active materials, the D50 of the small particle size positive electrode active material with a relatively small particle size may be desirably greater than or equal to 1 µm and less than 10 µm, and the D50 of the large particle size positive electrode active material with a relatively large particle size may be desirably greater than or equal to 10 µm and less than or equal to 20 µm, greater than or equal to 11 µm and less than or equal to 19 µm, greater than or equal to 12 µm and less than or equal to 18 µm.

Moreover, the D50 of the small particle size positive electrode active material is more desirably greater than or equal to 2 µm and less than 8 µm, and more desirably greater than or equal to 3 µm and less than or equal to 7 µm.

When the D50 of the small particle size positive electrode active material is greater than or equal to 2 µm and less than 8 µm, the D50 of the large particle size positive electrode active material may be desirably greater than or equal to 8 µm and less than or equal to 20 µm, more desirably greater than or equal to 9 µm and less than or equal to 19 µm and particularly desirably greater than or equal to 10 µm and less than or equal to 18 µm.

These small particle size positive electrode active material and large particle size positive electrode active material may have the same composition or different compositions.

An amount of the positive electrode active material in the positive electrode active material layer may be greater than or equal to 85 wt% and less than or equal to 92 wt%, greater than or equal to 85 wt% and less than or equal to 91 wt%, or greater than or equal to 87 wt% and less than or equal to 91 wt%.

As the solid electrolyte, one made of one or more solid electrolyte materials selected from the examples given in the description of the solid electrolyte layer can be widely used. Among them, Li₆PS₅Cl, a solid electrolyte material (argyrodite-based) with an argyrodite-type crystal structure, is desirable because it is easy to control the particle size, enables high charging by miniaturization, and can form a good interface with the positive electrode active material. In addition, it may be a desirable material in that it has a wide potential window and is excellent in voltage resistance, and a mass production manufacturing process has been established, so that it is a material that can be expected in terms of cost.

As the solid electrolyte material, in addition to those described above, argyrodite-based Li₆PS₅BrₓCl₁₋ₓ, glass ceramic-based Li₂S-P₂S₅-LiX (X=Br or I), etc. may be used.

Examples of the shape of the solid electrolyte include particle shapes such as spherical shape and elliptical sphere shape.

When the solid electrolyte is in the form of particles, the particle size of the primary particles desirably has a D50 based on a volume-based particle size distribution obtained by a laser diffraction/scattering particle size distribution measurement method of greater than or equal to 0.1 µm and less than or equal to 3.0 µm. The D50 of the solid electrolyte is more desirably greater than or equal to 0.2 µm and less than or equal to 2.8 µm, and greater than or equal to 0.3 µm and less than or equal to 2.5 µm. On the other hand, the D50 of solid electrolyte based on a volume-based particle size distribution obtained by a laser diffraction/scattering particle size distribution measurement method is measured using xylene as a dispersion medium and a particle size distribution measuring device (PSA1090) manufactured by Antonpa.

An amount of the solid electrolyte based on the total positive electrode active material layer (i.e., when the mass of the positive electrode active material layer is 100%) may be greater than or equal to 7 wt% and less than or equal to 15 wt%, more desirably greater than or equal to 8 wt% and less than or equal to 13 wt%, and particularly desirably greater than or equal to 9 wt% and less than or equal to 13 wt%.

The conductive auxiliary agent is one or more substances selected from the group consisting of graphite, carbon black, acetylene black, ketjen black, carbon fiber, metal powder, etc.

An amount of the conductive auxiliary agent in the positive electrode active material layer may be greater than or equal to 0.1 wt% and less than or equal to 10 wt%, desirably greater than or equal to 0.2 wt% and less than or equal to 9 wt%, more desirably greater than or equal to 0.3 wt% and less than or equal to 8 wt%, and particularly desirably greater than or equal to 0.5 wt% and less than or equal to 7 wt% when the amount of the solid electrolyte in the positive electrode active material layer is 100 wt%.

The amount of the conductive auxiliary agent based on the total positive electrode active material layer may be greater than or equal to 0.05 wt% and less than or equal to 1.0 wt, greater than or equal to 0.1 wt% and less than or equal to 0.8 wt%.

The binder may be one or more materials selected from a styrene butadiene rubber (SBR), polytetrafluoroethylene, polyvinylidene fluoride, polyethylene, etc.

An amount of the binder in the positive electrode active material layer may be desirably greater than or equal to 0.1 wt% and less than or equal to 1.0 wt%, desirably greater than or equal to 0.1 wt% and less than or equal to 0.9 wt%, more desirably greater than or equal to 0.1 wt% and less than or equal to 0.8 wt%, particularly desirably greater than or equal to 0.1 wt% and less than or equal to 0.7 wt% when the amount of the positive electrode active material in the positive electrode active material layer is 100 wt%.

The amount of the total positive electrode active material layer may be desirably greater than or equal to 0.05 wt% and less than or equal to 1.0 wt%, and more desirably greater than or equal to 0.1 wt% and less than or equal to 0.9 wt%.

In the positive electrode active material layer, in addition to the above, within a range that can exhibit the effect of the present embodiment (for example, less than or equal to 6 wt%, more desirably less than or equal to 3 wt%, particularly desirably less than or equal to 1 wt% based on the total positive electrode active material layer), it is possible to appropriately add fillers, dispersants, ion conductive auxiliary agents, etc.

### <3. Method for manufacturing a solid-state secondary battery according to the present embodiment >

Hereinafter, a method for manufacturing an all-solid-state lithium ion secondary battery according to the present embodiment will be described. The all-solid-state lithium ion secondary battery according to the present embodiment can be manufactured by separately manufacturing the positive electrode, negative electrode, and solid electrolyte layer, then laminating each layer and finally covering it with an exterior body.

### (3-1. Positive Electrode Manufacturing Process)

In the present embodiment, rather than a wet method of forming a positive electrode active material layer by suspending the material constituting the positive electrode active material layer in a solvent and then coating it on a current collector and drying it, a dry method is used to form the positive electrode active material layer by compressing a mixture of the materials that make up the positive electrode active material layer.

Specifically, the materials constituting the positive electrode active material layer (positive electrode active material, solid electrolyte, conductive additive, binder, etc.) are kneaded, and the kneaded material lump is compressed to form a positive electrode mixture sheet that becomes the positive electrode active material layer. A positive electrode is manufactured by laminating this positive electrode mixture sheet on the base layer using a roll press or the like. At this time, it is desirable to adjust a volume density of the positive electrode active material layer to be greater than or equal to 3.2 g/cm³ and less than or equal to 3.6 g/cm³ when the all-solid-state lithium ion secondary battery is completed (after compressing).

Needless to say, it is also possible to produce the positive electrode active material layer using a wet method.

### (3-2. Negative Electrode Manufacturing Process)

A slurry is prepared by adding the negative electrode active material layer materials (negative electrode active material, non-alloying element, binder, etc.) constituting the negative electrode active material layer to a polar solvent or nonpolar solvent. Next, the obtained slurry is coated on the negative electrode current collector and dried. Next, the obtained laminate is pressed (for example, pressurized using hydrostatic pressure) to produce the negative electrode. Because the pressurization treatment described above is not an essential process, it may be omitted.

### (3-3. Solid Electrolyte Layer Manufacturing Process)

The solid electrolyte layer may be produced by forming a film of the solid electrolyte formed of the sulfide-based solid electrolyte material. The specific manufacturing sequence is as follows.

First, the solid electrolyte material is manufactured by a melt quenching method or a mechanical milling method.

For example, when using the melt quenching method, a predetermined amount of starting materials (e.g., Li₂S, P₂S₅, etc.) are mixed, formed into pellets, reacted in a vacuum at a predetermined reaction temperature, and then quenched to prepare the sulfide-based solid electrolyte materials. On the other hand, the reaction temperature of the mixture of Li₂S and P₂S₅ is desirably 400 to 1000 °C, and more desirably 800 to 900 °C. Moreover, the reaction time is desirably 0.1 to 12 hours, and more desirably 1 to 12 hours. Additionally, the quenching temperature of the reactant is usually less than or equal to 10 °C, desirably less than or equal to 0 °C, and the quenching rate is usually about 1 °C to 10000 °C, and desirably about 1 °C to 1000 °C.

When using a mechanical milling method, the sulfide-based solid electrolyte material may be manufactured by stirring and reacting starting materials (for example, Li₂S, P₂S₅, etc.) using a ball mill or the like. Meanwhile, the stirring speed and stirring time in the mechanical milling method are not particularly limited, but the faster the stirring speed, the faster the production rate of the sulfide-based solid electrolyte material, and the longer the stirring time, the higher the conversion rate of the raw material into the sulfide-based solid electrolyte material.

Thereafter, the mixed raw materials obtained by the melt quenching method or the mechanical milling method are heat-treated at a predetermined temperature and then pulverized to produce a particle-shaped solid electrolyte. When a solid electrolyte has a glass transition point, it may change from amorphous to crystalline through heat treatment.

Subsequently, the solid electrolyte obtained by the above method is formed into a film using, for example, a known film forming method such as an aerosol deposition method, cold spray method, or sputtering method, thereby forming a solid electrolyte layer. On the other hand, the solid electrolyte layer may be produced by pressurizing the solid electrolyte particles alone. Additionally, the solid electrolyte layer may be produced by mixing a solid electrolyte, a solvent, and a binder, coating, drying, and pressurizing.

### (3-4. Assembly Process of All-solid-state Secondary Battery)

The positive electrode, the negative electrode, and the solid electrolyte layer produced by the above methods are laminated so that the positive electrode and the negative electrode sandwich the solid electrolyte layer, and these are covered on both sides with a laminate film forming the exterior body described above and then pressed (e.g., by pressurizing using hydrostatic pressure), an all-solid-state lithium ion secondary battery according to the present embodiment can be manufactured.

### <4. Effects of the Present Embodiment >

According to the all-solid-state lithium ion secondary battery constructed in this way, it is possible to provide a positive electrode for a solid-state secondary battery that satisfies high levels in both capacity and output by suppressing the internal resistance of the battery while increasing the energy density of the solid-state secondary battery sufficiently.

As the positive electrode active material, because a mixture of two types of positive electrode active materials with different D50 is used, the small particle size positive electrode active material enters voids between the large particle size positive electrode active material to increase the volume density of the positive electrode as much as possible, and a sufficient contact area between the positive electrode active material and the solid electrolyte in the positive electrode active material layer may be secured, improving lithium ionic conductivity.

Because the positive electrode active material layer is formed by a dry method, the amount of binder included in the positive electrode active material layer can be reduced as much as possible, and the energy density in the positive electrode active material layer can be increased as much as possible.

### [Mode for Invention]

Although the preferred embodiments have been described in detail above, the present description is not limited to these embodiments. It is clear to those of ordinary skill in the field of technology to which the present invention pertains that various changes or modifications may be made within the scope of the technical idea described in the patent claims, and these are naturally understood to fall within the technical scope of the present description.

### [Examples]

Hereinafter, the solid-state secondary battery according to the above embodiment will be described in more detail through examples, but the present description is not limited to these examples.

### (Example 1)

### [Manufacturing of Positive Electrode]

LiNi_{0.8}Co_{0.15}Mn_{0.05}O₂ (NCM) was prepared as a positive electrode active material. This positive electrode active material was coated with Li₂O-ZrO₂ by the method described in Non-Patent Document 1. For the positive electrode active material after coating, the D50 of the secondary particles was measured based on the volume-based particle size distribution obtained by laser diffraction/scattering particle size distribution measurement method, and it was found to be 6 µm. As a solid electrolyte, Li₆PS₅Cl, an argyrodite type crystal, was prepared. Additionally, polytetrafluoroethylene (Teflon (registered trademark) binder manufactured by DuPont Corporation) was prepared as a binder. Additionally, carbon nanofiber (CNF) was prepared as a conductive additive. Next, these materials were mixed in a weight ratio of positive electrode active material: solid electrolyte: conductive additive: binder = 87:12.8:0.1:0.1, and a positive electrode mixture sheet was produced by a dry method of stretching the mixture into a sheet shape. The thickness of the positive electrode mixture sheet at this time was such that the areal capacity (that is, current density at 1 C discharge) was 7 mA/cm². Additionally, this positive electrode mixture sheet was cut into a prescribed shape with a Thompson blade. The positive electrode current collector foil was a 10 µm thick aluminum foil coated with a 1 µm thick undercoat layer, which was cut out to the same size as the positive electrode sheet using a Pinnacle die.

### [Manufacturing of Negative Electrode]

A nickel foil current collector with a thickness of 10 µm was prepared as a negative electrode current collector.

In addition, as the negative electrode active material, CB1 manufactured by Asahi Carbon Corporation (nitrogen adsorption specific surface area is approximately 339 m²/g, DBP oil supply amount is approximately 193 ml/100 g), and CB2 manufactured by Asahi Carbon Corporation (nitrogen adsorption specific surface area is approximately 52 m²/g, DBP oil supply amount was about 193 ml/100 g), and silver particles with a particle size of 60 nm were prepared. Meanwhile, the particle size of the silver particles is D50 based on volume-based particle size distribution measured using, for example, a laser particle size distribution meter.

First, 1.5 g of CB1, 1.5 g of CB2, and 1 g of silver particles were placed in a container, and 4 g of an N-methylpyrrolidone (NMP) solution including 5 wt% of a binder (#9300 manufactured by Kureha Corporation) was added thereto. Next, a negative electrode active material layer coating solution was prepared by stirring the mixed solution while gradually adding a total amount of 30 g of NMP to the mixed solution. This negative electrode active material layer coating solution was coated on a nickel foil using a blade coater and dried in air at 80 °C for about 20 minutes to form a negative electrode active material layer. The resulting laminate was vacuum dried at 100 °C for about 12 hours and drilled out with a Pinnacle die (registered trademark). Through the above steps, a negative electrode was manufactured.

### [Manufacturing of Solid Electrolyte Layer]

First, a solid electrolyte layer coating solution was manufactured.

To the amorphous powder of Li₂S-P₂S₅ (80:20 mol%) as a sulfide-based solid electrolyte, an SBR binder dissolved in dehydrated xylene was added to 1 wt% based on the solid electrolyte to prepare a primary mixed slurry. Additionally, an appropriate amount of dehydrated xylene and dehydrated diethylbenzene for viscosity adjustment were added to the primary mixed slurry to prepare a secondary mixed slurry. In addition, in order to improve the dispersibility of the mixed powder, zirconia balls with a diameter of 5 mm were added to secondary mixed slurry so that voids, mixed powders, and zirconia balls each occupied 1/3 of the total volume of the mixing vessel. A tertiary liquid mixture prepared in this way was put into a rotation mixer and stirred at 3000 rpm for 3 minutes to produce a solid electrolyte layer coating solution.

The prepared solid electrolyte layer coating solution was coated with a blade onto a PET film whose surface had been subjected to release treatment, dried on a hot plate at 40 °C for 10 minutes, and then vacuum-dried at 40 °C for 12 hours to obtain a solid electrolyte sheet. The thickness of the solid electrolyte layer after drying was around 65 µm. The dried solid electrolyte sheet was pierced with a Thompson blade and processed to a predetermined size.

### [Manufacturing of Electrolyte-negative Electrode Structure]

A solid electrolyte sheet is placed on the surface of the negative electrode so that the solid electrolyte layer and the negative electrode active material layer are in contact, placed on an aluminum plate (support material) with a thickness of 3 mm with a release film attached, and vacuum laminate packing was performed including the support material. The solid electrolyte layer on the solid electrolyte sheet was integrated with the negative electrode by immersing it in a pressurized medium and subjecting it to hydrostatic pressure treatment (consolidation process using an isostatic press) at 50 MPa.

### [Manufacturing of All-solid-state Battery Cell]

On the electrolyte-negative electrode structure obtained by peeling the PET film from the solid electrolyte sheet, a positive electrode was placed so that the positive electrode active material layer and the solid electrolyte layer were in contact, and a laminate that was a pressurized all-solid-state lithium ion secondary battery was obtained. This all-solid-state lithium ion secondary battery before pressurizing was subjected to vacuum laminate packing. It was placed on a 3 mm thick aluminum plate (support material) with a release film attached, covered with a release film, and vacuum laminate packing was performed including the support material. It was immersed in a pressurized medium and subjected to hydrostatic pressure treatment (consolidation process using an isostatic press) at 490 MPa to obtain a single cell (test cell) of an all-solid-state lithium ion secondary battery.

Meanwhile, in this example, an aluminum plate and a metal plate made of SUS are used as support materials, but the material of these support materials is not particularly limited as long as it has a strength that can withstand pressurization by isostatic pressure.

### [Evaluation of Discharge Load Characteristics]

The manufactured test cell was measured and evaluated by using a charge and discharge evaluation device, TOSCAT-3100 made by Toyo System Co., Ltd. Charging and discharging of the cell were under a 45 É environment. The charging was performed to 4.15 V at a constant current of 0.1 C and then, to a current of 0.05 C at a constant potential. The discharging was performed to 2.5 V at constant currents of 0.1 C and 1 C to measure discharge energy density. Subsequently, a ratio (1 C/0.1 C) of 1 C discharge energy density to 0.1 C discharge energy density was used as an indicator of load characteristics. The higher ratio, the smaller internal resistance but the better battery characteristics. The results of the other examples and comparative examples are shown in Table 1.

### (Example 2)

In the positive electrode manufacturing process, a positive electrode was manufactured in the same manner as in Example 1 except that a positive electrode active material layer was formed to include 85 wt% of the positive electrode active material, 14.1 wt% of the solid electrolyte, 2.1@@@wt% of the conductive auxiliary agent based on 100 wt% of the solid electrolyte, and 0.7 wt% of the binder based on 100 wt% of the positive electrode active material.

### (Example 3)

In the positive electrode manufacturing process, a positive electrode was manufactured in the same manner as in Example 1 except that a positive electrode active material layer was formed to include 12.4 wt% of the solid electrolyte and based on 100 wt% of the positive electrode active material, 0.6 wt% of the binder.

### (Example 4)

In the positive electrode manufacturing process, a positive electrode was manufactured in the same manner as in Example 1 except that a positive electrode active material layer was formed to include a positive electrode active material layer including 12.05 wt% of the solid electrolyte and based on 100 wt% of the positive electrode active material, 1.0 wt% of the binder.

### (Example 5)

In the positive electrode manufacturing process, a positive electrode was manufactured in the same manner as in Example 1 except that a positive electrode active material layer was formed to include 88 wt% of the positive electrode active material, 11.3 wt% of the solid electrolyte, 1.8 wt% of the conductive auxiliary agent based on 100 wt% of the solid electrolyte, and 0.6 wt% of the binder based on 100 wt% of the positive electrode active material.

### (Example 6)

In the positive electrode manufacturing process, a positive electrode was manufactured in the same manner as in Example 1 except that a positive electrode active material layer was formed to include 89 wt% of the positive electrode active material, 10.3 wt% of the solid electrolyte, 1.9 wt% of the conductive auxiliary agent based on 100 wt% of the solid electrolyte, and 0.6 wt% of the binder based on 100 wt% of the positive electrode active material.

### (Example 7)

In the positive electrode manufacturing process, a positive electrode was manufactured in the same manner as in Example 1 except that a positive electrode active material layer was formed to include 85 wt% of the positive electrode active material prepared by mixing two types of positive electrode active materials with D50 of 6 µm and the D50 of 14 µm in a weight ratio of 1 : 3, 13.8 wt% of the solid electrolyte, 5.8 wt% of the conductive auxiliary agent based on 100 wt% of the solid electrolyte, and 0.5 wt% of the binder based on 100 wt% of the positive electrode active material.

### (Example 8)

In the positive electrode manufacturing process, a positive electrode was manufactured in the same manner as in Example 7 except that a positive electrode active material layer was formed to include 89 wt% of the positive electrode active material, 10.0 wt% of the solid electrolyte, and 5.8 wt% of the conductive auxiliary agent based on 100 wt% of the solid electrolyte.

### (Example 9)

In the positive electrode manufacturing process, a positive electrode was manufactured in the same manner as in Example 8 except that carbon black was used as the conductive auxiliary agent.

### (Example 10)

In the positive electrode manufacturing process, a positive electrode was manufactured in the same manner as in Example 8 except that a positive electrode active material layer was formed to include 90 wt% of the positive electrode active material, 9.15 wt% of the solid electrolyte, and 0.3 wt% of the binder based on 100 wt% of the positive electrode active material.

### (Example 11)

In the positive electrode manufacturing process, a positive electrode was manufactured in the same manner as in Example 10 except that areal capacity of the positive electrode was 8 mAh/cm².

### (Example 12)

An all-solid-state lithium ion secondary battery was manufactured in the same manner as in Example 10 except that areal capacity of the positive electrode was 9 mAh/cm².

### (Example 13)

In the positive electrode manufacturing process, a positive electrode was manufactured in the same manner as in Example 10 except that a positive electrode active material layer was formed to include 91 wt% of the positive electrode active material, 8.2 wt% of the solid electrolyte, and 6.7 wt% of the conductive auxiliary agent based on 100 wt% of the solid electrolyte.

### (Example 14)

In the positive electrode manufacturing process, a positive electrode was manufactured in the same manner as in Example 3 except that D50 of the positive electrode active material was 14 µm.

### (Example 15)

In the positive electrode manufacturing process, a positive electrode was manufactured in the same manner as in Example 3 except that a positive electrode active material layer was formed to include 88 wt% of a positive electrode active material prepared by mixing two types of positive electrode active materials with D50 of 3 µm and D50 of 10 µm in a weight ratio of 1 : 3, 11.15 wt% of the solid electrolyte, 5.4 wt% of the conductive auxiliary agent based on 100 wt% of the solid electrolyte, and 0.3 wt% of the binder based on 100 wt% of the positive electrode active material.

### (Example 16)

In the positive electrode manufacturing process, a mixture of two positive electrode active materials with D50 of 6 µm and D50 of 14 µm in a weight ratio of 1 : 3 was used as the positive electrode active material layer. As the solid electrolyte, Li₂-P₂S₅-LiBr, a glass ceramic-based solid electrolyte, was used. D50 of the solid electrolyte was set to be 1.2 µm. A positive electrode was manufactured in the same manner as in Example 1 except that a positive electrode active material layer was formed to have 90 wt% of the positive electrode active material, 9.15 wt% of the solid electrolyte, 6.6 wt% of the conductive auxiliary agent based on 100 wt% of the solid electrolyte, and 0.3 wt% of the binder based on 100 wt% of the positive electrode active material.

### (Example 17)

In the positive electrode manufacturing process, a mixture of two types of the positive electrode active materials with D50 of 6 µm and D50 of 14 µm in a weight ratio of 1:3 was used as the positive electrode active material. As the solid electrolyte, Lie-PSsX (X=ClBr mixture), an argyrodite-based solid electrolyte, was used. D50 of of the solid electrolyte was set to be 0.8 µm. A positive electrode was manufactured in the same manner as in Example 1 except that a positive electrode active material layer was formed to have 90 wt% of the positive electrode active material, 9.15 wt% of the solid electrolyte, 6.6 wt% of the conductive auxiliary agent based on 100 wt% of the solid electrolyte, and 0.3 wt% of the binder based on 100 wt% of the positive electrode active material.

### (Example 18)

In the positive electrode manufacturing process, a positive electrode was manufactured in the same manner as in Example 1 except that a positive electrode active material layer was formed to have 85 wt% of the positive electrode active material, 12.8 wt% of the solid electrolyte with D50 of 2 µm, 6.3 wt% of the conductive auxiliary agent based on 100 wt% of the solid electrolyte, and 0.5 wt% of the binder based on 100 wt% of the positive electrode active material.

### (Comparative Example 1)

In the positive electrode manufacturing process, a positive electrode was manufactured in the same manner as in Example 1 except that a positive electrode active material layer was formed to have 11.4 wt% of the solid electrolyte and based on 100 wt% of the positive electrode active material, 1.7 wt% of the binder.

### (Comparative Example 2)

In the positive electrode manufacturing process, a positive electrode was manufactured in the same manner as in Example 10 except that a positive electrode active material layer was formed to include 8.2 wt% of the solid electrolyte, 11.0 wt% of the conductive auxiliary agent based on 100 wt% of the solid electrolyte, and 1.0 wt% of the binder based on 100 wt% of the positive electrode active material.

### (Comparative Example 3)

In the positive electrode manufacturing process, a positive electrode was manufactured in the same manner as in Example 13 except that the positive electrode active material layer was formed to include 93 wt% of the positive electrode active material and 6.2 wt% of the solid electrolyte.

### (Comparative Example 4)

In the positive electrode manufacturing process, a positive electrode was manufactured in the same manner as in Example 8 except that a positive electrode active material layer was formed to include 8.95 wt% of the solid electrolyte, 20.1 wt% of the conductive auxiliary agent based on 100 wt% of the solid electrolyte, and 0.3 wt% of the binder based on 100 wt% of the positive electrode active material.

### (Comparative Example 5)

In the positive electrode manufacturing process, a positive electrode was manufactured in the same manner as in Example 8 except that a positive electrode active material layer was formed to include 10.75 wt% of the solid electrolyte and based on 100 wt% of the positive electrode active material, 0.3 wt% of the binder but not include the conductive auxiliary agent.

**(Table 1)**

| | Positive electrod e active material D50 µm | | Posit ive elect rode activ e mate rial ratio wt% | Solid elect rolyt e D50 µm | Solid electro lyte amoun t wt% | Cond uctive auxili ary agent amou nt wt% | Binde r amou nt wt% | Bind er/ posit ive elect rode activ e mate rial % | Cond uctive auxili ary agent / solid electr olyte % | Positi ve electr ode densi ty g/m³ | 0.1C discharge | | 1C discharge | | 1C/0.1C discharg e energy ratio |
|---|---|---|---|---|---|---|---|---|---|---|---|---|---|---|---|
| | | | | | | | | | | | curre nt densi ty mA/ cm² | energ y densi ty mWh/ g ^{-CAM, 0.1C} | curre nt densi ty mA/ cm² | energ y densi ty mWh/ g ^{-CAM, 1C} | |
| Ex.1 | 6 | | 87 | 0.6 | 12.8 | 0.1 | 0.1 | 0.1 | 0.8 | 3.34 | 0.7 | 794 | 7 | 654 | 0.82 |
| Ex.2 | 6 | | 85 | 0.6 | 14.1 | 0.3 | 0.6 | 0.7 | 2.1 | 3.25 | 0.7 | 798 | 7 | 659 | 0.83 |
| Ex.3 | 6 | | 87 | 0.6 | 12.4 | 0.1 | 0.5 | 0.6 | 0.8 | 3.34 | 0.7 | 797 | 7 | 649 | 0.81 |
| Ex.4 | 6 | | 87 | 0.6 | 12.05 | 0.1 | 0.85 | 1.0 | 0.8 | 3.34 | 0.7 | 789 | 7 | 610 | 0.77 |
| Ex.5 | 6 | | 88 | 0.6 | 11.3 | 0.2 | 0.5 | 0.6 | 1.8 | 3.36 | 0.7 | 775 | 7 | 585 | 0.75 |
| Ex.6 | 6 | | 89 | 0.6 | 10.3 | 0.2 | 0.5 | 0.6 | 1.9 | 3.38 | 0.7 | 768 | 7 | 552 | 0.72 |
| Ex.7 | 6 | 14 | 85 | 0.6 | 13.8 | 0.8 | 0.4 | 0.5 | 5.8 | 3.35 | 0.7 | 783 | 7 | 635 | 0.81 |
| Ex.8 | 6 | 14 | 89 | 0.6 | 10.0 | 0.6 | 0.4 | 0.4 | 5.8 | 3.51 | 0.7 | 784 | 7 | 614 | 0.78 |
| Ex.9 | 6 | 14 | 89 | 0.6 | 10.0 | 0.6 | 0.4 | 0.4 | 5.8 | 3.51 | 0.7 | 781 | 7 | 616 | 0.79 |
| Ex.10 | 6 | 14 | 90 | 0.6 | 9.15 | 0.6 | 0.25 | 0.3 | 6.6 | 3.50 | 0.7 | 765 | 7 | 537 | 0.70 |
| Ex.11 | 6 | 14 | 90 | 0.6 | 9.15 | 0.6 | 0.25 | 0.3 | 6.6 | 3.50 | 0.8 | 771 | 8 | 564 | 0.73 |
| Ex.12 | 6 | 14 | 90 | 0.6 | 9.15 | 0.6 | 0.25 | 0.3 | 6.6 | 3.50 | 0.9 | 763 | 9 | 532 | 0.70 |
| Ex.13 | 6 | 14 | 91 | 0.6 | 8.2 | 0.55 | 0.25 | 0.3 | 6.7 | 3.52 | 0.7 | 788 | 7 | 627 | 0.80 |
| Ex.14 | 14 | | 87 | 0.6 | 12.4 | 0.1 | 0.5 | 0.6 | 0.8 | 3.41 | 0.7 | 661 | 7 | 493 | 0.75 |
| Ex.15 | 3 | 10 | 88 | 0.6 | 11.15 | 0.6 | 0.25 | 0.3 | 5.4 | 3.44 | 0.7 | 780 | 7 | 610 | 0.78 |
| Ex.16 | 6 | 14 | 90 | 1.2 | 9.15 | 0.6 | 0.25 | 0.3 | 6.6 | 3.55 | 0.7 | 752 | 7 | 526 | 0.70 |
| Ex.17 | 6 | 14 | 90 | 0.8 | 9.15 | 0.6 | 0.25 | 0.3 | 6.6 | 3.55 | 0.7 | 775 | 7 | 567 | 0.73 |
| Ex.18 | 6 | | 85 | 2 | 12.8 | 0.8 | 0.4 | 0.5 | 6.3 | 3.14 | 0.7 | 763 | 7 | 601 | 0.79 |
| Comp . Ex.1 | 6 | | 87 | 0.6 | 11.4 | 0.1 | 1.5 | 1.7 | 0.9 | 3.34 | 0.7 | 768 | 7 | 522 | 0.68 |
| Comp . Ex.2 | 6 | 14 | 90 | 0.6 | 8.2 | 0.9 | 0.9 | 1.0 | 11.0 | 3.50 | 0.7 | 761 | 7 | 480 | 0.63 |
| Comp . Ex.3 | 6 | 14 | 93 | 0.6 | 6.2 | 0.55 | 0.25 | 0.3 | 8.9 | 3.57 | 0.7 | 646 | 7 | 191 | 0.30 |
| Comp . Ex.4 | 6 | 14 | 89 | 0.6 | 8.95 | 1.8 | 0.25 | 0.3 | 20.1 | 3.51 | 0.7 | 763 | 7 | 529 | 0.69 |
| Comp . Ex.5 | 6 | 14 | 89 | 0.6 | 10.75 | 0 | 0.25 | 0.3 | 0 | 3.51 | 0.7 | 766 | 7 | 520 | 0.68 |

Referring to the results of Table 1, if a positive electrode active material layer was formed to include a positive electrode active material in an amount of greater than or equal to 85 wt% and less than or equal to 92 wt%, a solid electrolyte in an amount of greater than or equal to 7 wt% and less than or equal to 15 wt%, a conductive auxiliary agent in an amount of greater than or equal to 0.1 wt% and less than or equal to 10 wt% based on 100 wt% of the solid electrolyte, and a binder in an amount of greater than or equal to 0.1 wt% and less than or equal to 1.0 wt% based on 100 wt% of the positive electrode active material, compared with the comparative examples including each component out of the aforementioned ranges, an 1 C/0.1 C discharge energy ratio of 0.70 or more as well as high discharge energy density, that is, high power was achieved. On the other hand, because 1 C discharge energy became smaller than 0.1 C discharge energy, this 1 C/0.1 C discharge energy ratio had an upper limit of less than 1.00.

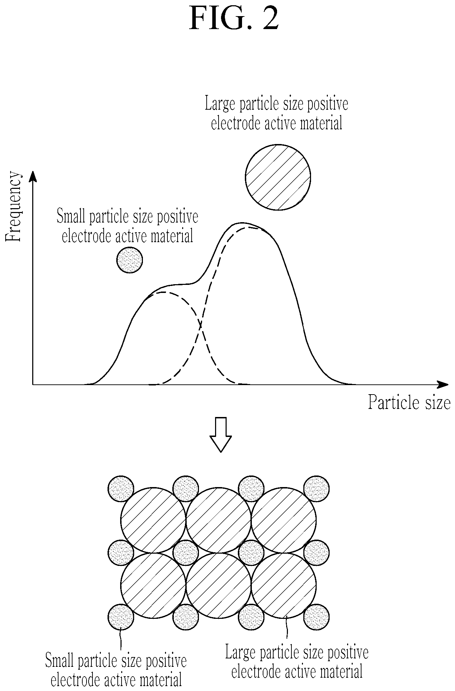

The D50 of the positive electrode active material, referring to the results of Table 1, turned out to be desirably greater than or equal to 1 µm and less than or equal to 20 µm. In addition, comparing Examples 4 and 14, a positive electrode active material containing two types of positive electrode active materials having different D50 is thought to be particularly desirable. In this way, if two types of positive electrode active materials with different D50 were contained, for example, as shown in FIG. 2, the small particle size positive electrode active material was not only inserted into spaces among the large particle size positive electrode active material to increase positive electrode density, but also the positive electrode active materials sufficiently secured a contact area with a solid electrolyte layer.

In addition, referring to the results of Example 15, the small particle size positive electrode active material had a particle size of greater than or equal to 1 µm and less than 10 µm, and the large particle size positive electrode active material had a particle size of greater than or equal to 10 µm and less than or equal to 20 µm.

Referring to the results of Example 6, even though types of the conductive auxiliary agent were changed, the effects of the present invention were achieved without problems. Referring to the results of Examples 16 and 17, even though types of the solid electrolyte were changed, the effects of the present invention were achieved without problems.

Furthermore, although not described here, even if types of the positive electrode active material and types of the binder were changed, it may be easily inferred that the results with the same tendency were obtained.

Although the embodiments have been described in detail above, the scope of rights is not limited thereto, and various modifications and improvements made by those skilled in the art using the basic concepts defined in the following claims also fall within the scope of rights.

### <Description of Symbols>

| | |
|---|---|
| 1: solid-state secondary battery | 10:positive electrode |
| 11: positive electrode current collector | |
| 12: positive electrode active material layer | |
| 20: negative electrode | 21: negative current collector |
| 22: negative electrode active material layer | |

## Claims

1. A positive electrode for a solid-state secondary battery, comprising
a positive electrode current collector and a positive electrode active material layer,
wherein the positive electrode active material layer includes a positive electrode active material, a solid electrolyte, a binder, and a conductive auxiliary agent,
an amount of the positive electrode active material based on 100 wt% of the positive electrode active material layer is greater than or equal to 85 wt% and less than or equal to 92 wt%,
an amount of the solid electrolyte based on 100 wt% of the positive electrode active material layer is greater than or equal to 7 wt% and less than or equal to 15 wt%,
when the amount of the positive electrode active material in the positive electrode active material layer is 100 wt%, an amount of the binder in the positive electrode active material layer is greater than or equal to 0.1 wt% and less than or equal to 1.0 wt%, and
when the amount of the solid electrolyte in the positive electrode active material layer is 100 wt%, an amount of the conductive auxiliary agent in the positive electrode active material layer is greater than or equal to 0.1 wt% and less than or equal to 10 wt%.

2. The positive electrode for a solid-state secondary battery as claimed in claim 1, wherein
a D50 based on a volume-based particle size distribution obtained by a laser diffraction/scattering particle size distribution measurement method of the positive electrode active material is greater than or equal to 1 µm and less than or equal to 20 µm.

3. The positive electrode for a solid-state secondary battery as claimed in claim 2, wherein
the positive electrode active material includes two types of positive electrode active materials with different D50, wherein one of the two types of positive electrode active materials, a small particle size positive electrode active material, has a D50 of greater than or equal to 1 µm and less than 10 µm, and the other large particle size positive electrode active material has a D50 of greater than or equal to 10 µm and less than or equal to 20 µm.

4. The positive electrode for a solid-state secondary battery as claimed in claim 3, wherein
the small particle size positive electrode active material has the D50 of greater than or equal to 2 µm and less than 8 µm and the large particle size positive electrode active material has the D50 of greater than or equal to 8 µm and less than or equal to 20 µm.

5. The positive electrode for a solid-state secondary battery as claimed in claim 3, wherein
the small particle size positive electrode active material has the D50 of greater than or equal to 2 µm and less than 8 µm and the large particle size positive electrode active material has the D50 of greater than or equal to 10 µm and less than or equal to 20 µm.

6. The positive electrode for a solid-state secondary battery as claimed in claim 1, wherein
the positive electrode active material satisfies any one of Chemical Formula 1 or Chemical Formula 2:
[Chemical Formula 1] LiₐNiₓCo_{y}M_{1-x-y}O₂
[Chemical Formula 2] LiaNixCoyO2
(wherein M in Chemical Formula 1 is one or more metal elements selected from aluminum and manganese, and
a, x, y, and 1-x-y in Chemical Formula 1 and Chemical Formula 2 are numbers satisfying 0.20≤a≤1.20, 0.80≤x<1.00, 0<y≤0.20, 0<1-x-y≤0.10, respectively.)

7. The positive electrode for a solid-state secondary battery as claimed in claim 1, wherein
the solid electrolyte is a sulfide-based solid electrolyte including lithium, phosphorus, and sulfur, and
a D50 based on a volume-based particle size distribution obtained by a laser diffraction/scattering particle size distribution measurement method is greater than or equal to 0.1 µm and less than or equal to 3 µm.

8. The positive electrode for a solid-state secondary battery as claimed in claim 1, wherein
a volume density of the positive electrode active material layer after compressing is greater than or equal to 3.2 g/cm³.

9. A solid-state secondary battery comprising the positive electrode as claimed in any one of claim 1 to claim 8,
a discharge energy density ratio which is obtained by dividing the discharge energy density when a discharge current is 1 C by the discharge energy density when a discharge current is 0.1 C is greater than or equal to 0.70 and less than 1.00.

10. A method of manufacturing a positive electrode for a solid-state secondary battery, comprising
forming the positive electrode active material layer by a dry method to manufacture the positive electrode for a solid-state secondary battery as claimed in any one of claim 1 to claim 8.
